# EUROPÄISCHE PATENTSCHRIFT

(11) **EP 2 301 800 B1**
(45) Veröffentlichungstag und Bekanntmachung des Hinweises auf die Patenterteilung: **24.12.2014**
(21) Anmeldenummer: 10009365.7
(22) Anmeldetag: 09.09.2010
(51) Int. Cl.: B60P 3/22

(54) **Vorrichtung zur Abgabe von flüssigen Medien aus einzelnen Kammern eines Tankwagens**
Device for dispensing liquid media from individual chambers of a tanker
Dispositif de dépôt de milieux fluides à partir de chambres individuelles d'un véhicule à réservoir

(30) Priorität: 21.09.2009 DE 202009012992 U
(43) Veröffentlichungstag der Anmeldung: 30.03.2011
(73) Patentinhaber: Saeta GmbH & Co. KG, 22880 Wedel (DE)
(72) Erfinder: Haar, Thomas, 25469 Halstenbek (DE)
(74) Vertreter: Hauck Patent- und Rechtsanwälte

(56) Entgegenhaltungen:
- WO-A1-98/33675
- US-A- 3 360 000

## Beschreibung

Die Erfindung bezieht sich auf eine Vorrichtung zur Abgabe von flüssigen Medien aus einzelnen Kammern eines Tankwagens nach dem Anspruch 1.

Tankwagen weisen bekanntlich mehrere Kammern auf, die gegebenenfalls mit unterschiedlichen Medien befüllt werden. Zu Befüll- und Entnahmezwecken ist jeder Kammer ein Bodenventil zugeordnet, das über einen Leitungsabschnitt mit einem Kollektor verbunden ist. An den Kollektor schließt sich die Abgabeleitung an, die am Ende mit einem Abgabeschlauch in Verbindung steht. Dieser ist zumeist auf einer Trommel aufgewickelt und weist am Ende eine Abgabepistole auf. In der Abgabeleitung befinden sich eine Förderpumpe und ein Volumenzähler. Ausgangsseitig des Volumenzählers ist ein Absperrventil vorgesehen. Im Verbindungsbereich der Leitungsabschnitte mit dem Kollektor ist außerdem ein Kollektorventil angeordnet. Mit dem Leitungsabschnitt ist außerdem eine Befüllkupplung sowie ein Befüllventil verbunden, um die Befüllung der Kammern in einem Depot über das Bodenventil vorzusehen.

Aus WO 98/33675 ist bekannt, ein Produkt, das sich im Leitungssystem nach Abschluss des Abgabevorgangs befindet, in die betreffende Kammer zurückzuleiten. Bei einer Ausführung ist eine Sammelleitung mit einem Anschlussabschnitt ausgestattet, mit dem die Abgabepistole verbindbar ist. Die Sammelleitung führt zur Oberseite der einzelnen Kammern und ist über zugeordnete Ventile mit den Kammern verbunden. Bei einer zweiten Ausführungsform ist der Anschluss für die Abgabepistole über ein Wahlventil und Rückschlagventile mit den Abgabeleitungen verbunden, die bodenseitig mit den Kammern verbindbar sind. Die Rückführung von Produkt nach dem Befüllvorgang in einem sogenannten Vollschlauchsystem ist vor allem dann erwünscht, wenn in den Kammern unterschiedliche Produkte enthalten sind und eine Vermischung bei Abgabe von Produkt aus einer anderen Kammer vermieden oder minimiert werden soll.

Die Rückführung bei einem Vollschlauchsystem bei einer bekannten Vorrichtung ist wie folgt: Nach Beendigung der Abgabe wird die Pumpe gestoppt oder das Abgabeventil geschlossen. Das Bodenventil der Tankkammer, aus dem ein Produkt abgegeben wurde, wird geschlossen. Die Pistole des Abgabeschlauchs wird mit dem Rückführungsanschluss verbunden. Optional kann der Kollektor bei offener Entlüftung und Absenken des Flüssigkeitsniveaus bis vor die Pumpe entleert werden. Ansonsten erfolgt die Leerung vollständig über das neu abzugebende Produkt aus einer anderen Tankkammer. Danach öffnet das Bodenventil der Kammer mit dem neuen Produkt. Die Pumpe wird wieder gestartet oder das Abgabeventil geöffnet. Es wird soviel Flüssigkeit aus der neuen Kammer gepumpt, bis das neue Produkt am Schlauchende, d.h. an der Pistole, ankommt. Dies kann ohne Weiteres dadurch festgestellt werden, dass der Volumenzähler die durch die Abgabeleitung strömende Menge misst. Das Volumen dieses Leitungsabschnitts ist bekannt. Wurde zuvor der Kollektor entleert, kann auch dies ohne Weiteres mit einbezogen werden, da auch das Volumen des Kollektors naturgemäß bekannt ist. Das Abgabeventil wird geschlossen oder die Pumpe gestoppt. Die Abgabepistole wird am Schlauchende geschlossen. Schließlich wird Druckluft auf den Raum zwischen Anschluss der Pistole und der Verbindung zur Abgabeleitung gegeben, damit dieser keine Flüssigkeit mehr enthält. Schließlich wird die Abgabepistole vom Rückführungsanschluss entfernt.

Wie ersichtlich befindet sich nach Beendigung des Abgabevorgangs ein erhebliches Produktvolumen in der Abgabeleitung und im Abgabeschlauch. Es besteht Gefahr, dass die Bedienungsperson dieses Volumen nicht in die betreffende Kammer zurückleitet, sondern zu anderen Zwecken abzweigt. Dies kann mit den vorhandenen Mitteln eines Abgabesystems nicht festgestellt werden. Es besteht ferner die Gefahr, dass der Bediener bei der Rückführung das Medium in eine falsche Tankkammer rückleitet. Dies entweder zu Betrugszwecken oder auch irrtümlich. Schließlich kann eine Manipulation darin bestehen, dass der Bediener vor einer Abgabe an einen Kundentank den Volumenzähler hochtreibt und erst dann die Abgabepistole an den Kundentank anschließt. Hierbei erfolgt ein Umpumpen des Mediums im Kreis ohne eine zwischenzeitliche Nullstellung des Volumenzählers, bevor die Pistole an den Kundentank gekoppelt wird.

Der Erfindung liegt daher die Aufgabe zugrunde, eine Vorrichtung zur Abgabe von flüssigen Medien aus einzelnen Kammern eines Tankwagens anzugeben, bei der die Rückführung von Produkt aus dem Leitungssystem der Abgabevorrichtung in eine Kammer überwacht wird.

Diese Aufgabe wird durch die Merkmale des Anspruchs 1 gelöst.

Bei der erfindungsgemäßen Vorrichtung ist dem Anschluss für die Rückführung vor oder hinter dem Rückschlagventil ein Sensor zugeordnet, der ein Überwachungssignal auf eine Steuervorrichtung der Abgabevorrichtung gibt, wenn ein flüssiges Medium durch den Anschluss strömt.

Nach einer Ausgestaltung der Erfindung überwacht die Steuervorrichtung, ob das erste Anlaufsignal von dem Volumenzähler und das Überwachungssignal des Sensors innerhalb eines vorgegebenen Zeitfensters erscheinen. Hierbei wird berücksichtigt, dass der Volumenzähler bei der Rückführung zuerst anläuft, bevor das Medium über den Rückführungsanschluss strömt und das Rückschlagventil im Anschluss für die Rückführung öffnet. Das Ansprechen des Sensors ist damit naturgemäß zeitverzögert. Diese Verzögerungszeit wird als Sicherheitsmaßnahme gegen Manipulation im Zeitfenster überwacht. Der gleiche Vorgang kann bei Beendigung der Rückführung erfolgen. Auch hierbei wird das vom Volumenzählersignal und vom Sensorsignal gebildete Zeitfenster in der Steuervorrichtung überwacht.

Nach einer weiteren Ausgestaltung der Erfindung wird das Überwachungssignal und das Signal vom Volumenzähler in der Steuervorrichtung in Beziehung gesetzt, und die Steuervorrichtung erzeugt ein Rückführungssignal bei einer vorgegebenen Beziehung. Mit Hilfe des Sensors kann das durch den Anschluss fließende Volumen bestimmt und mit dem vom Volumenzähler gemessenen Volumen verglichen werden. Stimmen die Messwerte nicht überein, liegt eine Manipulation vor.

Nach einer weiteren Ausgestaltung der Erfindung kann der Sensor so ausgelegt sein, dass er nur bei einem bestimmten Flüssigkeitsstrom unter Druck anspricht. Wird zum Beispiel Gas über den Rückführanschluss geleitet bzw. in den Leitungsabschnitt zwischen dem Rückführungsanschluss und dem Rückschlagventil, wird vom Sensor kein Überwachungssignal erzeugt bzw. wird in der Steuervorrichtung das Signal vom Sensor nicht als eine ordnungsgemäße Rückführung anzeigend betrachtet. Eine Manipulation mit Druckluft, soweit sie am Tankfahrzeug zur Verfügung steht, ist damit ausgeschlossen.

Nach einer anderen Ausgestaltung der Erfindung sind in der Steuervorrichtung die Überwachungssignale der Sensoren den Kammern bzw. den Bodenventilen der Kammern zugeordnet. Die Steuervorrichtung stellt fest, in welche Kammer eine Rückführung erfolgt. Dadurch ist es möglich, die Rückführung automatisch zu stoppen, wenn die Abgabepistole nicht an den zutreffenden Anschluss gekoppelt ist. Auf diese Weise wird eine unerwünschte Produktvermischung vermieden oder aber eine Manipulation, wenn z.B. der Bediener das rückgeführte Produkt in eine leere Tankkammer leitet, um es anschließend zu entwenden.

Schließlich wird eine weitere Manipulationsmöglichkeit dadurch verhindert, dass die Steuervorrichtung nach Beendigung eines Pumpvorgangs den Volumenzähler automatisch auf Null zurückstellt. Dadurch wird vermieden, dass der Volumenzähler durch Umpumpen im Kreislauf eine Abgabemenge fingiert, die in Wirklichkeit nicht an einen Kunden gegeben wurde und die anschließend entwendet wird. Die erfindungsgemäße Vorrichtung macht eine solche Manipulation erkennbar oder unmöglich.

Eine besonders vorteilhafte Ausgestaltung der Erfindung sieht vor, dass dem Rückschlagventil ein Sensor zugeordnet ist, der die Stellung eines Ventilglieds des Rückschlagventils überwacht.

Bei der erfindungsgemäßen Abgabevorrichtung ist jedem Leitungsabschnitt zwischen Boden- und Kollektorventil ein Anschluss für die Abgabepistole vorgesehen. Dieser Anschluss weist vorzugsweise einen nach oben stehenden, vorzugsweise gekrümmten Rohrstutzen auf, der am Ende mit Anschlussmitteln für die Abgabepistole vorgesehen ist. Diese Mittel weisen zumeist eine Überwurfmutter auf, die auf ein Gewinde der Abgabepistole geschraubt wird. Dem Anschluss ist ein Rückschlagventil zugeordnet, das verhindert, dass das Produkt über den Anschluss austritt. Erfindungsgemäß ist dem Rückschlagventil der Sensor zugeordnet, der die Stellung eines Ventilglieds des Rückschlagventils überwacht und ein Überwachungssignal auf eine Steuervorrichtung für die Abgabevorrichtung gibt.

Nachdem die Bedienperson die Abgabepistole mit dem Anschluss verbunden hat, wird das zugeordnete Bodenventil geöffnet. Das Kollektorventil bleibt geschlossen. Das Produkt strömt dann, angetrieben durch die Pumpe, über das Bodenventil in die betreffende Kammer zurück. Das hierbei in die Kammer zurückfließende Volumen wird im Volumenzähler gemessen. Das Überwachungssignal tritt naturgemäß später auf als das erste Anfangssignal des Volumenzählers. Dieses Zeitfenster wird, wie schon erwähnt, überwacht.

Während des Rückführvorgangs kann das Medium mittels Schwerkraft aus dem Kollektor entfernt und zurückgepumpt werden. Dazu ist ein Entlüftungsventil dem Kollektor zugeordnet, das dafür sorgt, dass der Kollektor geleert werden kann. Alternativ wird das "alte" Medium aus Kollektor und Abgabeleitung dadurch rückgerührt, dass es mit dem neuen Medium herausgedrückt wird. Dadurch ergibt sich naturgemäß eine größere Vermischung der Produkte.

Um zu verhindern, dass Luft beim Entleeren des Kollektors in die Förderpumpe eintritt, ist der Abgabeleitung aufströmseitig der Pumpe ein Leermeldesensor zugeordnet. Sobald dieser Leermeldesensor anspricht, wird die Förderpumpe stillgesetzt und der Rückführvorgang unterbrochen. Der sich noch im Leitungssystem befmdliche Rest des Produktes wird anschließend mit Hilfe des "neuen" Mediums in die Kammer zurückgefördert.

Dem Rückführanschluss für die Abgabepistole ist ein Druckluftanschluss zugeordnet. Die Druckluft dient dazu, den Abschnitt zwischen Anschluss und Rückschlagventil von Flüssigkeit zu befreien, wenn die Rückführung beendet ist. Hierbei ist die Abgabepistole noch am Anschluss angeschlossen.

Zur Erfassung der Ansprache des Rückschlagventils bei der Produktrückförderung können die verschiedensten Sensoren zur Anwendung kommen. Nach einer Ausgestaltung der Erfindung ist ein Näherungssensor vorgesehen, der anspricht, wenn das Ventilglied des Rückschlagventils Stellung einnimmt, die dem eingestellten Volumenstrom der Pumpe entspricht. Nach einer weiteren Ausgestaltung der Erfindung ist dem Ventilglied ein Führungsstößel zugeordnet, der bei der Verstellung des Ventilglieds in die Öffnungsstellung in den Bereich des Nährungssensors gelangt. Das dadurch erzeugte Überwachungssignal wird auf die der Vorrichtung zugeordnete Steuervorrichtung gegeben, welche auch die Rückführung überwacht. Registriert die Steuervorrichtung eine bestimmte Abgabemenge, ohne dass ein Überwachungssignal erscheint, ist dies ein Zeichen dafür, dass Produkt anderweitig abgeleitet worden ist.

Das Rückschlagventil kann so ausgelegt werden, dass es nur ausreichend öffnet, wenn ein bestimmter Volumenstrom unter Druck durch den Rückführanschluss strömt. Öffnet das Rückschlagventil bei Zufuhr von Druckluft nur minimal, spricht der dem Ventilglied zugeordnete Sensor nicht an. Das Rückschlagventil bzw. die Vorspannung des Ventilglieds ist entsprechend auszulegen. Naturgemäß kann der Sensor auch eine Stellungsmessung des Ventilglieds vornehmen, d.h. ein stellungsabhängiges Signal erzeugen, wobei die Größe des Signals ausschlaggebend ist für die Feststellung einer ordnungsgemäßen, manipulationsfreien Rückführung des Mediums.

Die Erfindung wird nachfolgend anhand eines in den Zeichnungen dargestellten Ausführungsbeispiels näher erläutert.
- Fig. 1: zeigt äußerst schematisch eine Abgabevorrichtung nach der Erfindung.
- Fig. 2: zeigt schematisch einen Teil der Abgabevorrichtung nach Fig. 1.
- Fig. 3: zeigt ein Rückschlagventil mit Sensor für die Abgabevorrichtung nach den Figuren 1 und 2.

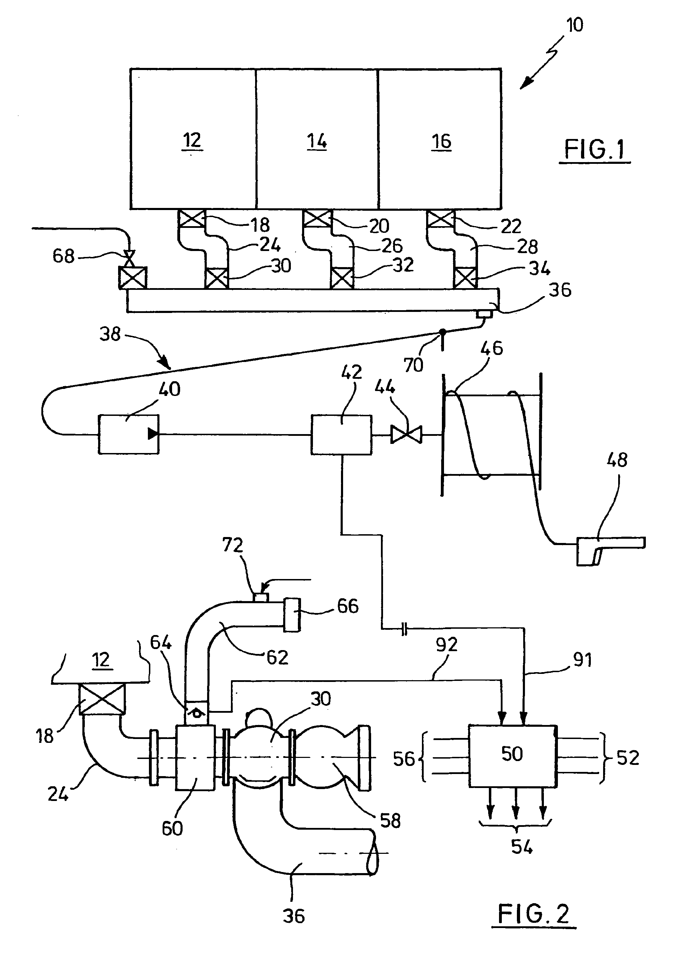

In Fig. 1 ist ein Tank 10 dargestellt, der z.B. zu einem Tankwagen gehört (nicht dargestellt). Der Tank 10 weist drei Kammern 12, 14, 16 auf. Jeder Kammer ist an der Unterseite ein Bodenventil 18 bzw. 20 bzw. 22 zugeordnet. Die Bodenventile 18 bis 22 sind über einen Leitungsabschnitt 24, bzw. 26 bzw. 28 und ein Kollektorventil 30 bzw. 32 bzw. 34 mit einem Kollektor 36 verbunden. An einem Ende des Kollektors 36 ist eine Abgabeleitung 38 angeschlossen, in der eine Förderpumpe 40 sowie ein Volumenzähler 42 angeordnet sind. Abströmseitig des Volumenzählers ist über ein Absperrventil 44 ein Abgabeschlauch 46 angeschlossen, der am Ende eine Abgabepistole 48 aufweist. Eine derartige Abgabevorrichtung ist konventionell. Soll z.B. Produkt aus der Kammer 12 abgegeben werden, werden das Bodenventil 18 und das Kollektorventil 30 geöffnet und die Pumpe 40 fördert das Medium aus der Kammer 12 zur Abgabepistole 48 und von dort in einen Aufnahmebehälter. Der Volumenzähler 42 zählt dabei die abgegebene Menge. Das Absperrventil 44 ist hierbei geöffnet. Die einzelnen Vorgänge werden von einer Steuervorrichtung 50 gesteuert, die in Fig. 2 angedeutet ist. Sie weist eine Anzahl von Steuerleitungen 52 bzw. 54 auf, die zu einzelnen Aktoren der Abgabevorrichtung führen. Mit der Steuervorrichtung 50 sind auch mehrere Sensoren der Abgabevorrichtung verbunden, wie dies bei 56 angedeutet ist. Außerdem ist der Volumenzähler 42 mit der Steuervorrichtung 50 verbunden, und zwar über die Signalleitung 91.

In Fig. 2 sind das Bodenventil 18 sowie das Kollektorventil 30 und der Kollektor 36 angedeutet. An das Kollektorventil 30 ist ein Befüllventil 58 angeflanscht, über das Befüllventil 58 erfolgt die Befüllung der Kammer 12 in einem Depot. Auch diese Vorkehrung ist konventionell.

Im Leitungsabschnitt 24 zwischen Kollektorventil 30 und Bodenventil 18 ist ein Gehäuse 60 geflanscht, das in Verbindung steht mit einem nach oben gerichteten gekrümmten Rohrstutzen 62. Zwischen dem Rohrstutzen 62 und dem Gehäuse 60 ist ein Rückschlagventil 64 angeordnet. Am freien Ende weist der Rohrstutzen 62 einen Anschluss 66 auf, mit dem die Abgabepistole 48 verbunden werden kann. Dies ist im Einzelnen nicht dargestellt. Mit dem Rohrstutzen ist ein Druckluftanschluss 72 verbunden. Jeder Kammer 12 bis 16 ist ein Rohrstutzen 62 zugeordnet. In Fig. 2 ist nur einer dargestellt.

Nach Beendigung des Abgabevorgangs kann das Produkt, das sich im Leitungsabschnitt 24, im Kollektor 36 und in der Abgabeleitung 38 sowie im Schlauch 46 befindet, in die Kammer 12 zurückgefördert werden. Zu diesem Zweck wird die Abgabepistole 48 mit dem Anschluss 66 dichtend verbunden. Anschließend wird das Bodenventil 18 geöffnet. Das Kollektorventil 30 ist geschlossen. Es wird nach Beendigung des Abgabevorgangs geschlossen. Anschließend wird die Pumpe 40 in Betrieb gesetzt und das Medium wird in die Kammer 12 zurückgepumpt.

Die Rückführung des Mediums aus Kollektor und Abgabeleitung kann auf zwei verschiedene Weisen erfolgen. Im einen Fall wird der Kollektor 36 durch Schwerkraft bei laufender Pumpe geleert, wobei ein Lüftungsventil 68 die Entleerung zulässt. Die Entleerung erfolgt bis kurz vor der Pumpe 40, was etwa durch einen Leermeldesensor 70 angezeigt wird. Sein Signal wird auf die Steuervorrichtung 50 gegeben, welche die Pumpe 40 stoppt oder das Abgabeventil 44 schließt. Anschließend wird das Bodenventil einer weiteren Kammer, beispielsweise der Tankkammer 14 oder 16, mit dem Bodenventil 20 bzw. 22 geöffnet, sodass das noch im System befindliche "alte" Medium durch das "neue" Medium herausgedrückt und in die Tankkammer 12 rückgeführt wird. Über den Volumenzähler 42 und durch die bekannten Volumina im Abgabesystem kann festgestellt werden, wann das neue Medium an der Abgabepistole 48 angekommen ist. Eine andere Möglichkeit besteht darin, das "alte" Medium im gesamten Abgabesystem durch das "neue" Medium herauszudrücken. Auch hier kann über den Volumenzähler 42 festgestellt werden, wann das neue Medium an der Abgabepistole 48 angekommen ist. Im letzteren Fall ist die Produktvermischung größer als im ersteren Fall.

Nach Beendigung des beschriebenen Rückführvorgangs befindet sich noch Medium im Rohrstutzen 62. Dieses wird mit Hilfe der über den Anschluss 72 zugeführten Druckluft und bei geschlossener Abgabepistole 48 am Anschluss 46 über das Rückschlagventil 64 ebenfalls in die zugeordnete Kammer rückgedrückt. Danach wird die Abgabepistole vom Anschluss 66 entfernt und die Abgabe des neuen Mediums über die Abgabepistole 48 kann in der beschriebenen Art und Weise erfolgen.

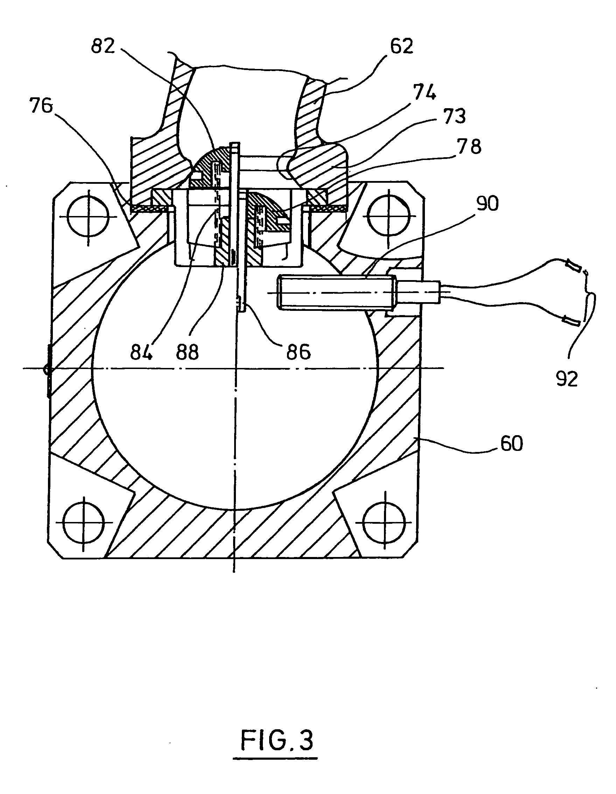

In Fig. 3 ist das Gehäuse 60 im Schnitt dargestellt. Man erkennt außerdem den Rohrstutzen 62, der dichtend an das Gehäuse 60 angeschlossen ist. Zu diesem Zweck ist ein Ringbund 73 vorgesehen, der mit dem Rohrstutzen 62 ausgebildet ist und dichtend über einen Dichtring 76 am Gehäuse 60 anliegt. In einer Ausnehmung des Gehäuses 60 ist ein Ventilgehäuse 78 angeordnet. Im Ventilgehäuse 78 befindet sich ein Ventilteller 82, der links in geschlossener und rechts in geöffneter Stellung gezeigt ist. Eine Feder 84 spannt den Ventilteller 82 gegen einen kegeligen Ventilsitz 74 im Ringbund 73 vor. Der Ventilteller 82 weist mittig einen Stößel 86 auf, der in einem Führungsabschnitt 88 des Ventilgehäuses 78 geführt ist. In der geöffneten Stellung ragt der Stößel 86 in das Innere des Gehäuses 60 hinein. In einer Wand des Gehäuses 60 ist ein Näherungssensor 90 angeordnet, der sich relativ nahe bis zum Stößel 86 erstreckt. Der Näherungssensor 90, der nach einem bekannten Prinzip arbeitet, erfasst über den Stößel 86, wenn der Ventilteller 82 in der Öffnungsstellung ist. Der Näherungssensor 90 gibt ein Signal auf die Steuervorrichtung 50 über eine Leitung 92, wie in Fig. 2 dargestellt. Mit Hilfe des Sensors 90 wird erfasst, wenn über den Anschluss 66 und den Rohrstutzen 62 Produkt in die zugeordnete Kammer rückgeführt wird. Wird bei Beendigung eines Abgabevorgangs vom Volumenzähler 42 Volumen gezählt, ohne dass der Näherungssensor 90 ein Überwachungssignal abgeben hat, ist dies ein Zeichen dafür, dass Produkt aus dem Abgabeleitungssystem unzulässiger Weise entnommen worden ist. Wie schon erwähnt, erfolgt in der Steuervorrichtung 50 die Registrierung des Auftretens eines Überwachungssignals vom Sensor 90, das in Beziehung zur Erzeugung eines ersten Signals des Volumenzählers 42 bzw. das Anlaufen des Volumenzählers gesetzt wird. Der Volumenzähler 42 läuft bei Beginn der Rückführung zunächst an, bevor der Sensor 90 die Strömung des Produktes feststellen kann. Wenn die Rückführung ordnungsgemäß abläuft, müssen beide Signale in einer bestimmten zeitlichen Beziehung stehen, d.h. in einem vorgegebenen Zeitfenster auftreten.

In der Steuervorrichtung 50 ist auch die Zuordnung der Anschlüsse 66 für die Rückführung zu den einzelnen Kammern 12 bis 16 registriert. Bei Auftauchen eines Überwachungssignals "weiß" die Steuervorrichtung, in welche Tankkammer eine Rückführung eines Mediums erfolgt. Dadurch besteht eine Überwachungsmöglichkeit der Rückführung in die zutreffende Kammer. Eine irrtümliche Rückführung in eine falsche Kammer wird sofort bemerkt und kann von der Steuervorrichtung 50 festgestellt werden, indem etwa die Pumpe 40 stillgesetzt oder das Abgabeventil 44 geschlossen wird. Auch eine manipulierte Rückführung in die unzutreffende Kammer zwecks späteren Entwendens des Mediums aus dieser Kammer kann auf diese Weise ebenfalls entweder registriert oder gestoppt werden.

Der Volumenzähler 42 zählt, wie erwähnt, auch das rückgeführte Volumen. Wird jedoch nach Beendigung dieses Vorgangs der Volumenzähler 42 nicht auf Null zurückgestellt und die Abgabepistole 48 an einen Kundentank angeschlossen, wird der Kunde um die Menge an Produkt betrogen, die vom Volumenzähler während der Rückführung des Produkts im Kreis registriert hat. Auch diese Manipulation kann daher durch die erfindungsgemäße Vorrichtung angezeigt oder durch sonstige Maßnahmen verhindert werden.

Wie beschrieben, ist das Ventilglied 82 durch die Feder 84 gegen den Ventilsitz 74 vorgespannt. Wird zum Beispiel Druckluft dem Rohrstutzen 62 zugeführt, öffnet das Ventilglied 82 zwar um einen gewissen Betrag, um die Druckluft hindurchzulassen, der Öffnungsweg des Ventilglieds 82 ist jedoch signifikant geringer als der, den es beim Durchfließen von flüssigem Medium zurücklegt. Erst der letztere Weg wird vom Sensor 90 erfasst und zu einem Überwachungssignal gewandelt. Dadurch wird durch Druckluft eine verursachte Manipulation verhindert.

## Patentansprüche

1. Vorrichtung zur Abgabe von flüssigen Medien aus einzelnen Kammern eines Tankwagens, wobei jede der Kammern (12, 14, 16) über ein Bodenventil (18, 20, 22) und ein Kollektorventil (30, 32, 34) mit einem Kollektor (36) verbunden ist und der Kollektor (36) über eine Abgabeleitung (38) mit einem Abgabeschlauch (46) verbunden ist, der am Ende eine Abgabepistole (48) aufweist, wobei ferner in der Abgabeleitung (38) eine Pumpe (40) und ein Volumenzähler (42) angeordnet sind, wobei in einem Leitungsabschnitt (24, 26, 28) zwischen Bodenventil (18, 20, 22) und Kollektorventil (30, 32, 34) ein Anschluss (66) für die Abgabepistole (48) vorgesehen ist, der über ein Rückschlagventil mit dem Leitungsabschnitt (24, 26, 28) verbunden ist, **dadurch gekennzeichnet, dass** dem Anschluss vor, hinter dem oder im Rückschlagventil ein Sensor (90) zugeordnet ist, der ein Überwachungssignal auf eine Steuervorrichtung (50) der Abgabevorrichtung gibt, wenn ein flüssiges Medium durch den Anschluss strömt.

2. Vorrichtung nach Anspruch 1, **dadurch gekennzeichnet, dass** die Steuervorrichtung (50) das Überwachungssignal und das Signal vom Volumenzähler (42) in Beziehung setzt und die Steuervorrichtung (50) ein Rückführsignal erzeugt, wenn die Signale eine vorgegebene Korrelation aufweisen.

3. Vorrichtung nach Anspruch 2, **dadurch gekennzeichnet, dass** die Steuervorrichtung (50) überwacht, ob das erste oder letzte Signal von dem Volumenzähler (42) und das Überwachungssignal innerhalb eines vorgegebenen Zeitfensters erscheinen, wobei das erste Signal dem Start und das letzte Signal dem Stopp des Volumenzählers (42) entspricht.

4. Vorrichtung nach einem der Ansprüche 2 oder 3, **dadurch gekennzeichnet, dass** der Sensor (90) nur anspricht, wenn ein bestimmter Flüssigkeitsstrom unter vorgegebenem Druck durch den Anschluss fließt.

5. Vorrichtung nach einem der Ansprüche 1 bis 4, **dadurch gekennzeichnet, dass** in der Steuervorrichtung (50) die Überwachungssignale der Sensoren den Kammern (12, 14, 16) bzw. Bodenventilen (18, 20, 22) zugeordnet sind und die Steuervorrichtung (50) dadurch feststellt, in welche Kammer (12, 14, 16) eine Rückführung eines flüssigen Mediums erfolgt.

6. Vorrichtung nach Anspruch 5, **dadurch gekennzeichnet, dass** die Steuervorrichtung (50) die Rückführung stoppt, wenn das Überwachungssignal nicht derjenigen Kammer (12, 14, 16) zugeordnet ist, aus der das rückgeführte Medium aus der Abgabeleitung (38) stammt oder zu der Kammer (12, 14, 16) gehört, in welche das Medium rückgeführt werden soll.

7. Vorrichtung nach einem der Ansprüche 3 bis 6, **dadurch gekennzeichnet, dass** die Steuervorrichtung (50) nach Beendigung der Rückführung den Volumenzähler (42) automatisch auf Null zurückstellt.

8. Vorrichtung nach Anspruch 7, **dadurch gekennzeichnet, dass** der Anschluss für die Abgabepistole einen nach oben stehenden gekrümmten Rohrstutzen (62) aufweist, der mit einem Gehäuse (60) verbunden ist, das im Zuge des Leitungsabschnitts (24) zwischen Bodenventil und Kollektorventil angeordnet ist.

9. Vorrichtung nach Anspruch 8 , **dadurch gekennzeichnet, dass** der Sensor (90) in einer Wand des Gehäuses (60) oder Rohrstutzen angeordnet ist und einem Führungsstößel (86) des Rückschlagventils zugeordnet ist, der in einer Führungsbohrung des Ventilgehäuses (78) geführt ist.

10. Vorrichtung nach einem der Ansprüche 8 oder 9, **dadurch gekennzeichnet, dass** der Sensor (90) ein Näherungssensor ist.

## Claims

1. A device for dispensing liquid media from individual chambers of a tanker truck, wherein each of the chambers (12, 14, 16) is connected to a collector (36) through a floor valve (18, 20, 22) and a collector valve (30, 32, 34), and the collector (36) is connected via a discharge line (38) to a discharge hose (46) that has a discharge nozzle (48) at the end, wherein furthermore a pump (40) and a volume meter (42) are arranged in the discharge line (38), wherein in a line section (24, 26, 28) between the floor valve (18, 20, 22) and collector valve (30, 32, 34), there is a connection (66) for the discharge nozzle (48) which is connected via a check valve to the line section (24, 26, 28), **characterized in that** a sensor (90) is assigned to the connection before, after, or in the check valve and emits a monitoring signal to a control device (50) of the discharge device when a liquid medium flows through the connection.

2. The device according to claim 1, **characterized in that** the control device (50) correlates the monitoring signal and the signal from the volume meter (42), and the control signal (50) generates a feedback signal when the signals have a predetermined correlation.

3. The device according to claim 2, **characterized in that** the control device (50) monitors whether the first or last signal from the volume meter (42) and the monitoring signal appear within a predetermined time window, wherein the first signal corresponds to the start, and the last signal corresponds to the stop of the volume meter (42).

4. The device according to one of claims 2 or 3, **characterized in that** the sensor (90) only responds when a specific stream of fluid flows through the connection at a predetermined pressure.

5. The device according to one of claims 1 to 4, **characterized in that** the monitoring signals of the sensors are assigned to the chambers (12, 14, 16) or floor valves (18, 20, 22) in the control device (50), and the control device (50) thereby identifies the chamber (12, 14, 16) in which a fluid medium is returning.

6. The device according to claim 5, **characterized in that** the control device (50) stops the return when the monitoring signal is not assigned to that chamber (12, 14, 16) from which the returned medium originates from the discharge line (38), or belongs to the chamber (12, 14, 16) to which the medium is to be returned.

7. The device according to one of claims 3 to 6, **characterized in that** the control device (50) automatically resets the volume meter (42) to zero after returning ends.

8. The device according to claim 7, **characterized in that** the connection for the discharge nozzle has a pipe sleeve (62) that is connected to a housing (60) which is arranged between the floor valve and collector valve along the line section (24).

9. The device according to claim 8, **characterized in that** the sensor (90) is arranged in a wall of the housing (60) or pipe sleeve, and is assigned to a guide pushrod (86) of the check valve that is guided in a guide hole in the valve housing (78).

10. The device according to one of claims 8 or 9, **characterized in that** the sensor (90) is a proximity sensor.

## Revendications

1. Dispositif pour distribuer des produits fluides à partir de compartiments individuels d'un véhicule à réservoir, dans lequel chacun des compartiments (12, 14, 16) est connecté à un collecteur (36) via une vanne de fond (18, 20, 22) et une vanne de collecteur (30, 32, 34), et le collecteur (36) est connecté à un tube de distribution (46) via une conduite de distribution (38) qui comporte à son extrémité un pistolet de distribution (48), dans lequel une pompe (40) et un compteur volumétrique (42) sont en outre agencés sur la conduite de distribution (38), dans lequel une connexion (66) pour le pistolet de distribution (48) est pourvue dans une section de conduite (24, 26, 28) entre la vanne de fond (18, 20, 22) et la vanne de collecteur (30, 32, 34), qui est connectée à la section de conduite (24, 26, 28) via un clapet anti-retour, **caractérisé en ce que** la connexion est associée à un capteur (90) situé devant, derrière ou dans le clapet anti-retour, ledit capteur procurant un signal de surveillance à un dispositif de commande (50) du dispositif de distribution lorsqu'un produit fluide s'écoule à travers la connexion.

2. Dispositif selon la revendication 1, **caractérisé en ce que** le dispositif de commande (50) met en relation le signal de surveillance et le signal du compteur volumétrique (42) et le dispositif de commande (50) procure un signal de recirculation lorsque les signaux présentent une corrélation déterminée.

3. Dispositif selon la revendication 2, **caractérisé en ce que** le dispositif de commande (50) surveille si le premier ou le dernier signal du compteur volumétrique (42) et le signal de surveillance apparaissent dans une fenêtre temporelle déterminée, moyennant quoi le premier signal du démarrage du compteur volumétrique (42) correspond au dernier signal d'arrêt de celui-ci.

4. Dispositif selon l'une des revendications 2 ou 3, **caractérisé en ce que** le capteur (90) ne s'active que lorsqu'un débit de fluide déterminé s'écoule par la connexion sous une pression prédéfinie.

5. Dispositif selon l'une des revendications 1 à 4, **caractérisé en ce que** les signaux de surveillance des capteurs sont associés aux compartiments (12, 14, 16) ou aux vannes de fond (18, 20, 22) dans le dispositif de commande (50) et **en ce que** le dispositif de commande (50) détermine ainsi dans quel compartiment (12, 14, 16) se produit une recirculation d'un produit fluide.

6. Dispositif selon la revendication 5, **caractérisé en ce que** le dispositif de commande (50) arrête la recirculation lorsque le signal de surveillance n'est pas associé audit compartiment (12, 14, 16) dont le produit recirculé provient via la conduite de distribution (38) ou appartient au compartiment (12, 14, 16) dans lequel le produit doit être recirculé.

7. Dispositif selon l'une des revendications 3 à 6, **caractérisé en ce que** le dispositif de commande (50) se réinitialise automatiquement à zéro après la fin de la recirculation du compteur volumétrique (42).

8. Dispositif selon la revendication 7, **caractérisé en ce que** la connexion pour le pistolet de distribution comporte une buse (62) qui reste recourbée vers le haut, connectée à un boîtier (60) qui est agencé dans la section de conduite (24) entre la vanne de fond et la vanne de collecteur.

9. Dispositif selon la revendication 8, **caractérisé en ce que** le capteur (90) est agencé dans une paroi du boîtier (60) ou de la buse et est associé à un poussoir de guidage (86) du clapet anti-retour qui est guidé dans un alésage de guidage du boîtier de vanne (78).

10. Dispositif selon l'une des revendications 8 ou 9, **caractérisé en ce que** le capteur (90) est un capteur de proximité.
